# EUROPEAN PATENT SPECIFICATION

(11) **EP 1 526 470 B1**
(45) Date of publication and mention of the grant of the patent: **27.04.2011**
(21) Application number: 04021451.2
(22) Date of filing: 09.09.2004
(51) Int. Cl.: H04L 29/06, H04L 29/08

(54) **Group shared spaces**
Von Nutzergruppen geteilte Räume
Espaces partagés par des groupes

(30) Priority: 24.10.2003 US 693228
(43) Date of publication of application: 27.04.2005
(73) Proprietor: MICROSOFT CORPORATION, Redmond, Washington 98052 (US)
(72) Inventor: Lieuallen, Brian R., Redmond, Washington 98052 (US); Miller, John L., Redmond, Washington 98052 (US); Shappell, Michael E., Redmond, Washington 98052 (US); Rao, Ravi T., Redmond, Washington 98052 (US); Senkeresty, Scott A., Redmond, Washington 98052 (US)
(74) Representative: Grünecker, Kinkeldey, Stockmair & Schwanhäusser Anwaltssozietät

(56) References cited:
- US-A- 5 793 365
- "METHOD FOR IMPLEMENTING A PEER INTERFACE WITHIN WINDOWS FILE MANAGER" IBM TECHNICAL DISCLOSURE BULLETIN, IBM CORP. NEW YORK, US, vol. 38, no. 7, 1 July 1995 (1995-07-01), pages 539-540, XP000521783 ISSN: 0018-8689
- "OVERLAY MECHANISM FOR ANNOTATING SHARING AND REMOTE WINDOW-CONTROL" IBM TECHNICAL DISCLOSURE BULLETIN, IBM CORP. NEW YORK, US, vol. 36, no. 6A, 1 June 1993 (1993-06-01), pages 407-409, XP000372474 ISSN: 0018-8689
- LEE J H ET AL ASSOCIATION FOR COMPUTING MACHINERY: "SUPPORTING MULTI-USER, MULTI-APPLET WORKSPACES IN CBE" CSCW '96. PROCEEDINGS OF THE ACM 1996 CONFERENCE ON COMPUTER SUPPORTEDCOOPERATIVE WORK. BOSTON, NOV. 16 - 20, 1996, ACM CONFERENCE ON COMPUTER SUPPORTED COOPERATIVE WORK, NEW YORK,NY : ACM, US, 16 November 1996 (1996-11-16), pages 344-353, XP000724421 ISBN: 0-89791-765-0

## Description

### TECHNICAL FIELD

This invention relates to communication and interaction over a computer network. More particularly, the invention is directed to a system and method for defining a server-less shared memory space to facilitate interactions and data availability among defined groups of two or more communicating entities.

### BACKGROUND OF THE INVENTION

The popularity of the Internet and other networks has caused a migration of various interactions and tasks from the physical world to the digital world. For example, documents and files that would in years past have been shared by sharing physical copies to other members in a group are now often handled electronically and transmitted digitally over a network. In such exchanges between members of a group, it is important to maintain a degree of control over access by various group members, particularly when the group is collaborating with each other.

With the coming of the digital age, the one activity that has not migrated strongly from the physical world to the digital one has been the group interaction. In our daily lives, we interact with people on a regular basis, and form social groups that we engage with on a variety of activities over time. Everyone in the social group knows about every one else, and these groups grow and change over time. This metaphor that exists in our daily lives has not translated into the digital world.

While a number of mechanisms and forums for digital communication between remote parties now exist, none of these has provided a compelling solution that can lead to widespread use. The existing communications mechanisms fail to now provide a user interface that is intuitive and easy to use. For example, these technologies do not provide a true group space within which group members may access shared files and engage in other group activities. Instead, many existing technologies tend to focus on a single activity or endeavor, such as gaming or file sharing, rather than on the group and its activities and communication. Other technologies allow group chatting, but have no true sense of groups, requiring setup of the group each time a group chat is attempted, and providing no mechanism for transitioning the group to an activity other than pure chatting without again manually setting the group up at the next activity.

In short, existing network interaction mechanisms do not provide a mechanism for readily manipulating shared data and information among a desired group of users. In addition, there is no user interface provided by existing mechanisms to simplify management of such shared data.

There thus remains a need to facilitate group interaction through which a desired group of users can interact with each other in a secured environment, and through which users can access, and maintain control with respect to files shared in their shared relationships with one another.

"METHOD FOR IMPLEMENTING A PEER INTERFACE WITHIN WINDOWS FILE MANAGER" IBM TECHNICAL DISCLOSURE BULLETIN, IBM CORP. NEW YORK, US, vol. 38, no. 7, 1 July 1995, pages 539-540, ISSN: 0018-8689 discloses a method for implementing resource sharing capabilities in the Windows 3.1 File Manager, giving users of Windows 3.1 functions similar to those available in Windows for Workgroups 3.11.

"OVERLAY MECHANISM FOR ANNOTATING SHARING AND REMOTE WINDOW-CONTROL" IBM TECHNICAL DISCLOSURE BULLETIN, IBM CORP. NEW YORK, US, vol. 36, no. 6A, 1 June 1993, pages 407-409, ISSN: 0018-8689 discloses a mechanism and user interface by which individual windows can be mirrored and shared between users in a personal conference by using remote control.

US 5 793 365 A discloses a system and method that provides each networked computer user with a user interface displaying visual representations of selected other computer users, generally of those workers in the user's workgroup, and further provides communication mechanisms for efficiently and easily contacting any of the displayed workers. The user interface also includes a display portion and mechanism for storing data files and the 21like so that all workgroup members may accumulate a set data files commonly used by the workgroup.

### SUMMARY

It is the object of the present invention to provide an improved method for sharing files in a computer network.

This object is solved by the subject matter of the independent claims.

Preferred embodiments are defined by the dependent claims.

The present invention is directed to a server-less, secured shared space that is presented to a user through a graphical interface. In an *embodiment, the invention is implemented in a peer-to-peer network environment to facilitate network communications among group members.

A shared space is presented as an entry in the file system such that user selectable management tasks and items may be activated. Such action includes various operations that are performed with respect to shared files within the space. Upon creation of the shared space, other users can access and/or transmit files, and perform other file management operations such as drag and drop shared files, move, copy and other file system management tasks. In addition, shared files and directories may be linked into the shared space. This provides a clear sense of user operations that are available for shared files, to thereby create an ease of use of group spaces.

The invention provides a method for creating a shared space, and enables sharing of files in the shared space. An owner of the shared space can invite other users into the space for the purpose of sharing files such as pictures, video or other content. The shared space itself is secure, such that only individuals invited are able to connect to the space. Once created, users can drag and drop files into the shared space itself as well as perform other file system operations with respect to the shared files and directories.

For transferring files within the shared space, metadata associated with files is created and propagated to all members of the shared space. Members who connect to the group later are still able to access such metadata and thereby continue to operate within the shared space. Upon receipt of the metadata, the infrastructure based on user settings can now handle the shared files as desired, such as by copying the shared files locally or not. In the case where a file is to be copied locally, a connection is established with the source of the file metadata, and the shared file is transferred from the source to the local computer. The process is secure in that only a valid member of the group may copy the shared file to its space.

With the use of a file system interface, files within a shared space may be managed quickly and effectively. In this way, other applications can readily access content within the shared spaces defined by the user.

### BRIEF DESCRIPTION OF THE DRAWINGS

Figure 1 is a schematic diagram generally illustrating an exemplary computer system usable to implement an embodiment of the invention;

Figure 2 is a schematic diagram illustrating an exemplary network environment for communications in an embodiment of the invention;

Figure 3 is a schematic diagram of a peer networking architecture according to one embodiment of the present invention;

Figure 4 is a display screen representation showing a number of user interface elements that may be presented to facilitate creation and manipulation of shared group spaces according to an embodiment of the invention;

Figure 5 is display screen representation of another group space user interface element that provides an appearance of a file system folder according to an embodiment of the present invention;

Figure 6 is display screen representation of a start menu display according to an embodiment of the present invention;

Figure 7 is display screen representation of a shared space folder according to an embodiment of the present invention;

Figure 8 is a display screen representation of the shared space folder of Figure 7 upon selection of the folder icon;

Figure 9 is a display screen representation of a shared space setting panel to facilitate group management and functionality;

Figure 10 is a display screen representation of a shared space task view according to an embodiment of the invention;

Figure 11 is a display screen representation of a list view of a shared space folder according to an embodiment of the invention;

Figure 12 is a display screen representation of a set-up wizard for creating or adding a member to a shared space according to an embodiment of the invention;

Figure 13 is a display screen representation of an Invitation wizard displayed to a user that has been invited to join a group;

Figure 14 is a display screen representation of a set-up wizard that enables a user with permission to change the role of a group member;

Figure 15 is a screen display of a shared space folder illustrating various properties concerning shared files located in the shared space according to an embodiment of the invention;

Figure 16 is a screen display illustrating a user interface during an operation in which shared files are copied according to an embodiment of the invention;

Figure 17 illustrates a drop-down menu in accordance with a presentation display according to an embodiment of the invention;

Figure 18 is a simplified flowchart illustrating various method steps in carrying out an operation in which a new member is invited to a group;

Figure 19 is a simplified flowchart illustrating various method steps in carrying out a shared file update according to an embodiment of the invention; and

Figure 20 is another simplified flowchart illustrating various method steps in carrying out the shared file update of Figure 19, from the perspective of another member of a group.

### DETAILED DESCRIPTION OF THE INVENTION

Generally, the present invention relates to a server-less, shared group space that enables secure interactions among defined members in a group. In one aspect, the invention provides a user interface that integrates with file system operations, such as drag-drop operations with respect to files that are placed into the shared space. The invention permits secure relationships to be formed and maintained with one or more other entities by creating a shared space.

Although it is not required for practicing the invention, the invention is described as it is implemented by computer-executable instructions, such as program modules, that are executed by a computing device. Generally, program modules include routines, programs, objects, components, data structures and the like that perform particular tasks or implement particular abstract data types.

The invention may be implemented in various computing device configurations. For example, the invention may be realized in hand-held devices, mobile phones, multi-processor systems, microprocessor-based or programmable consumer electronics, network PCs, minicomputers, mainframe computers and the like, wearable computing or communication devices, and any other device capable of both visual display and direct or indirect communication with another device. The invention may also be practiced in distributed computing environments, where tasks are performed by remote processing devices that are linked through a communications network. In a distributed computing environment, program modules may be located in both local and remote memory storage devices. Thus it will be understood that the invention is preferably incorporated into many types of computing environments as suggested above.

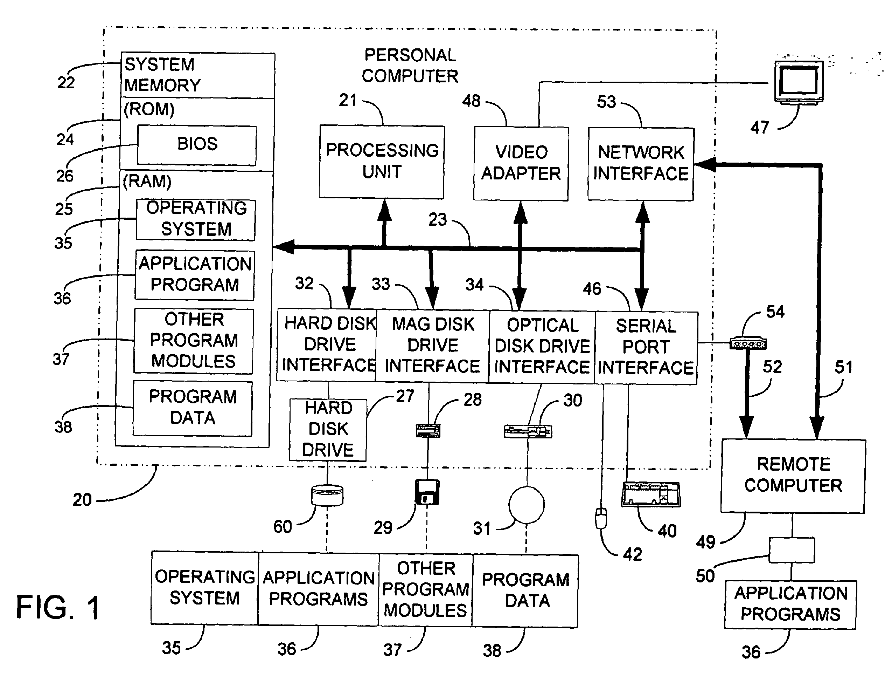

Before describing the invention in greater detail, an exemplary computing environment in which the invention may operate is described in connection with Figure 1. A computing device 20 includes a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help to transfer information between elements within the computing device 20, such as during start-up, is stored in ROM 24. The computing device 20 may further include a hard disk drive 27 for reading from and writing to a hard disk 60, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated computer-readable media provide nonvolatile storage of computer readable instructions, data structures, program modules and other data for the PC 20. Although the exemplary environment described herein employs a hard disk 60, a removable magnetic disk 29, and a removable optical disk 31, it will be appreciated by those skilled in the art that other types of computer readable media which can store data that is accessible by a computing device, such as magnetic cassettes, flash memory cards, digital video disks, Bernoulli cartridges, random access memories, read only memories, and the like may also be used in the exemplary operating environment.

Program modules are stored on the hard disk 60, magnetic disk 29, optical disk 31, ROM 24 or RAM 25, including an operating system 35, one or more applications programs 36, other program modules 37, and program data 38. A user enters commands and information into the device 20 through input devices such as a keyboard 40 and a pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or a universal serial bus (USB). A monitor 47 or other type of display device is also connected to the system bus 23 via an interface, such as a video adapter 48. In addition to the monitor, the computing device typically includes other peripheral output devices, not shown, such as speakers and printers.

The device 20 is operable in a networked environment using fixed or transient logical connections to one or more remote computing devices, such as a remote computer 49. The remote computer 49 may be another similar computing device, a server, a router, a network PC, a peer device or other common network node, or any other device type such as any of those mentioned elsewhere herein, and typically includes many or all of the elements described above relative to the computing device 20, although there is no such requirement, and only a memory storage device 50 has been illustrated in Figure 1. The logical connections depicted in Figure 1 include a local area network (LAN) 51 and a wide area network (WAN) 52. Such networking environments are commonplace in offices, enterprise-wide computer networks, intranets and the Internet.

When used in a LAN networking environment, the computing device 20 is connected to the local network 51 through a network interface or adapter 53. When used in a WAN networking environment, the computing device 20 typically includes a modem 54 or other means for establishing communications over the WAN 52. The modem 54, which may be internal or external, is connected to the system bus 23 via the serial port interface 46. Program modules depicted relative to the computing device 20, or portions thereof, may be stored in the remote memory storage device. It will be appreciated that the network connections shown are exemplary and other means of establishing a communications link between the computers may be used. Additionally, the invention is not intended to be limited to a particular network type. Any network type, wired or wireless, fixed or transient, circuit-switched, packet-switched or other network architectures, may be used to implement the present invention.

In the description that follows, the invention will be described with reference to acts and symbolic representations of operations that are performed by one or more computing devices, unless indicated otherwise. Such acts and operations, which are referred to as being computer-executed, include the manipulation by the processing unit of the computing device of electrical signals representing data in a structured form. This manipulation transforms the data or maintains it at locations in the memory system of the computing device, which reconfigures or otherwise alters the operation of the computing device in a manner well understood by those skilled in the art. The data structures are physical locations of memory with particular properties defined by the format of the data. However, while the invention is being described in the foregoing context, it is not meant to be limiting. Those of skill in the art will appreciate that various of the acts and operations described herein may also be implemented in hardware.

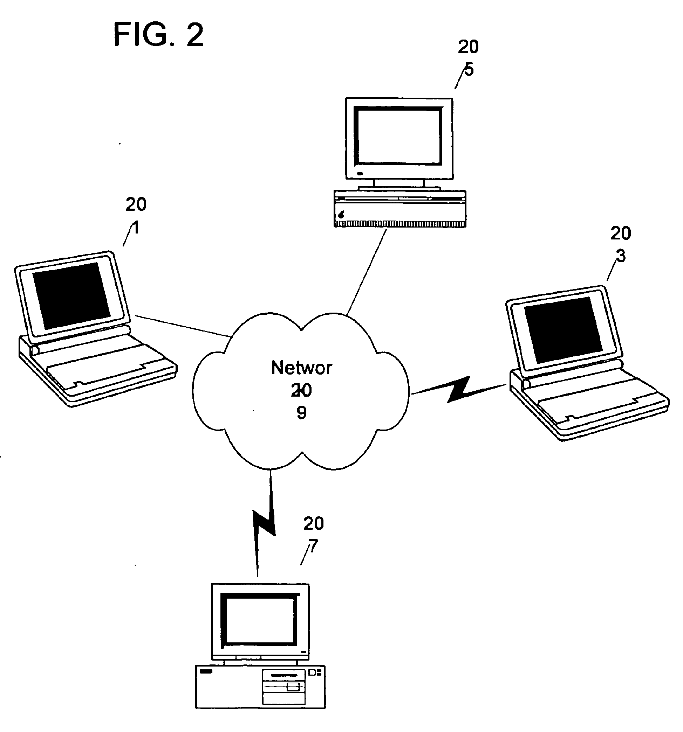

Figure 2 is a schematic diagram of a network environment within which an embodiment of the invention may be implemented. In particular, a plurality of user computing devices 201, 203, 205, and 207 are illustrated as being communicably linked via a network 209. Each user device will typically be used by or associated with a different user. The exact number of user devices so linked is not important for the present invention, although a network communication will typically involve at least two users. The invention has its greatest benefits when applied to small groups. The number of group members involved for sharing audio files should be limited when necessary to avoid a violation of any copyright pertaining to the shared audio material. Furthermore, while the type of network 209 is not critical, it is preferably a peer-to-peer network that allows an exchange of information, directly or indirectly, between two or more user machines. Via the network 209, a communication from one user may be transmitted to another user or users (via their respective user devices). While the user machines 201, 203, 205, 207 may be geographically remote from one another, the invention is also useful where groups are collaborating, which of course, may occur within a conference room or the like.

One or more user machines used to implement an embodiment of the invention may be as illustrated with respect to the computing device architecture of Figure 1, although there is no such limitation inherent in the invention. It is contemplated that an implementation of the invention will additionally or alternatively be used with any of a number of other communication device types, including but not limited to wearable communication devices, cell phones, and PDAs.

In accordance with the invention, a shared space is presented through a graphical user interface with the look and feel of existing file system features. For example, the invention may use Windows Explorer-style dialog boxes such as the Open dialog box or the like. Such file system operations are accessible through the created shared space. In one embodiment, the invention is implemented as a namespace extension to Windows Explorer that presents user interface elements in a similar or same manner as a file system would create those elements, such as presenting display windows, icons and other graphic presentations to render the appearance of a file system. For example, the invention may implement namespace extensions and basic folder object interfaces that enable Microsoft Windows Explorer file system capabilities. The application similarly enables various operations that are similar to accepted file system operations to be performed with respect to data residing in the shared space.

Alternatively, the invention may be implemented as a file system driver or filter driver that resides below the file system and accesses file system services provided by an operating system. In this embodiment, the file system displays files that it would typically display including files in the group space so that the file system is extended to file sharing.

In both embodiments, the invention preferably utilizes existing peer-to-peer infrastructure that allows for a large number of applications and/or scenarios to be delivered in a distributed environment. Such infrastructure may provide functionality including, without limitation, NAT traversal, name resolution, efficient multipoint communication, secure groups and distributed data management, as will be appreciated by those skilled in the art.

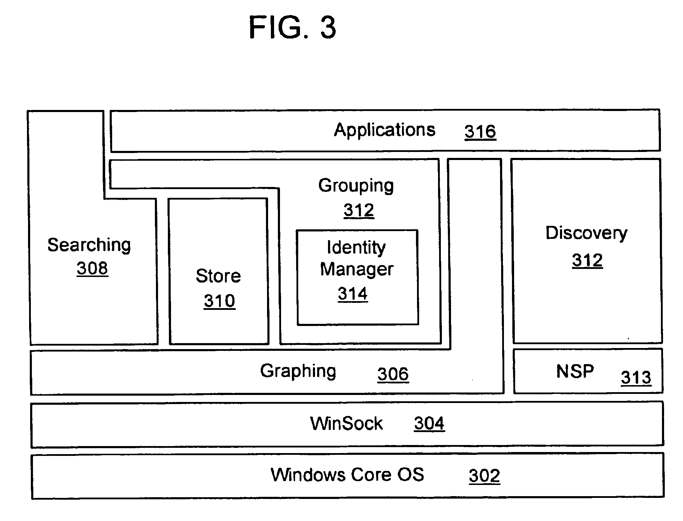

For data transmission and communication among group members, a peer networking architecture is preferably utilized. Figure 3 illustrates a peer networking architecture according to one embodiment of the invention. For performing the various peer-to-peer searching and management operations, the invention utilizes existing infrastructure such as described in patent application Serial Nos. 09/942,164, entitled "Peer-to-Peer Name Resolution Protocol (PNRP) and Multilevel Cache for Use Therewith," filed on August 29, 2001 and 09/955,923, entitled "Peer-to-Peer Group Management and Method for Maintaining Peer-to-Peer Graphs," filed on September 19, 2001. The subject matter of these applications is incorporated herein by reference in their entirety. The architecture includes a Core Operating System (OS) layer 302 upon which other layers and components are disposed. For example, a WinSock layer 304 is located above the Core OS layer 302. This layer includes socket extensions that are added to application identifiers in order to facilitate network communication. That is, the WinSock layer is a network application programming interface (API) for Microsoft Windows® that provides a well-defined set of data structures and function calls. In this way, application function calls requesting generic network services are translated into protocol-specific requests.

For performing a search for other peers in the cloud, various components in the architecture may be used as follows. The Discovery layer exposed through the Network Services Protocol component (NSP) 306 provides a means to resolve a name in a distributed, server-less way in a cloud. A Graphing component 306 provides a way of organizing a set of nodes for efficient exchange of information. A Grouping layer 316 provides a security layer on top of the Graphing component 306. Both the Graphing and the Grouping components utilize a Store 310 for an application to publish data to which can be disseminated among all members in the group/graph. An application denoted by the layer 320 can also search for data in the Grouping or the Graphing components by using a Searching component 308.

In accordance with the invention, a group shared space is represented by graphical user interface presentations and controls that are included as part of an existing file system, or at least an intuitive extension of existing file system operations. Much like the real-world, a shared space is created in order to form a relationship among one or more entities. The shared spaces created or used by the same entity are preferably displayed in a single shell folder. Controls for managing the shared spaces and their content are provided as part of a task pane in the shell folder.

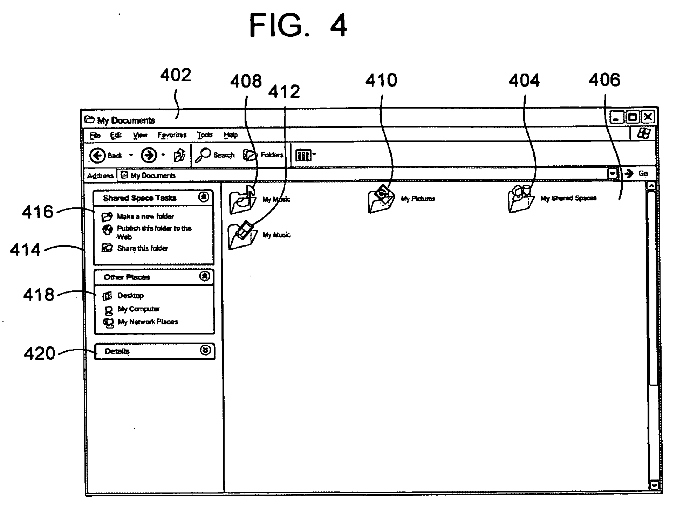

One overall user interface presentation according to an embodiment of the invention will be described with reference to Figure 4 before describing individual features in greater detail. A screen display for a "My Documents" folder 402 according to an embodiment of the invention comprises one or more of a number of elements, designed to ease the ability to access, create and manage a group shared space. Preferably, a group space folder object 404, in this case a "My Shared Spaces" subfolder icon, provides a link to a group shared space. As shown, the group space icon 404 is contained within the "My Documents" folder right pane display area 406. Other subfolders are also contained in the "My Documents" folder display area 406 such as a "My Music" subfolder 408, a "My Pictures" subfolder 410 and a "My Videos" subfolder 412. A particular user may have more than one group to which he or she belongs, and that each member of a group may belong to a group or groups to which one or more other members do not belong. Thus, although the relevant group space icon 404 appears to each group member, and appears identically on each machine, there may be portions of a user's screen display that are not shared with other group members.

The My Documents folder 402 also includes a pane 414 in the left-hand display area. This pane 414 includes a task pane 416 that presents various user-selectable File and Folder tasks that may be performed in connection with the shared space. These tasks include making a new shared space folder, publishing a shared space folder to the Internet, and Share this folder with other entities.

In addition to the task pane 416, the left-hand window includes other graphical features including an "Other Places" list 418 that presents links to one or more other file system locations. These include the "Desktop," "My Computer" and "My Network Places," as will be readily recognized by the user. Finally, the pane includes a "Details" list 420 which in this case is a drop-down list for providing details concerning a selected item in the "My Documents" folder.

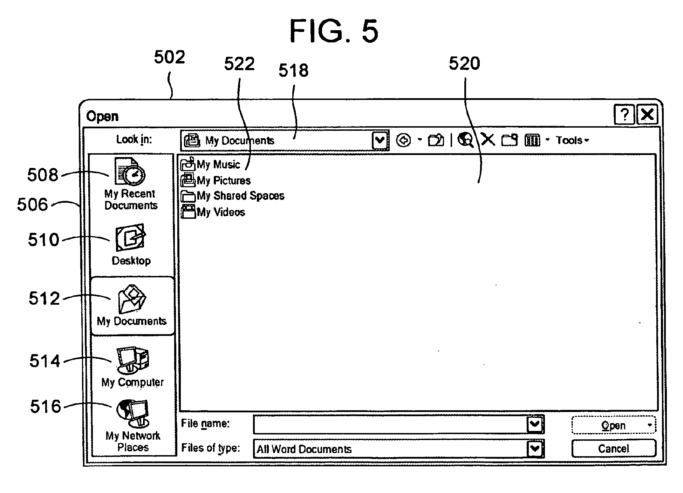

By including the shared space as a link in the "My Documents" folder of the file system, various windows and common dialogs may be used in conjunction with the shared files stored therein. In this way, operations such as open, save, save as, and the like may be performed on such content. One such example is shown in Figure 5. As indicated in a title bar 502, an Open window 504 is presented. This window includes, in a left-hand pane 506, various iconic shortcuts 508, 510, 512, 514 and 516 that provide links to various locations within the file system. When the "My Documents" shortcut 512 is selected, as is also indicated by the entry in the location field 518, the file system displays a listing of subfolders in a right-hand pane 520. This listing includes the "My Shared Spaces" folder icon 522, which is a link to the shared spaces folder. By selecting this folder through a double click or other suitable user operation, the system will display the contents of the shared space folder.

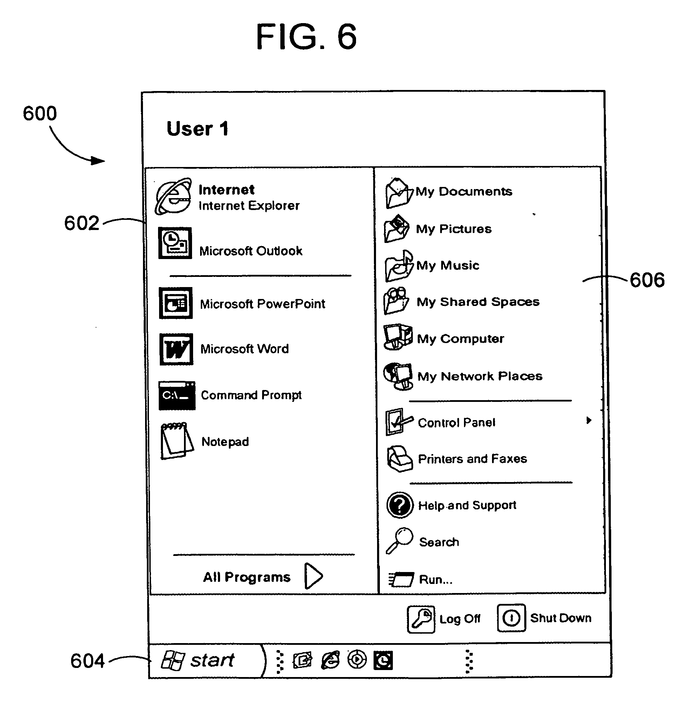

In addition to placement into the "My Documents" folder, a "My Shared Spaces" link may be included within a Start Menu presentation 600, such as the presentation displayed in Figure 6. The Start Menu 600 includes a listing of links to at least certain applications that may be launched by the system in a first pane 602 of the graphical display. In addition, a task bar tray 604 and controls are provided in a lower graphical display area 606. Finally, a "My Shared Spaces" link is provided as part of a listing on the right hand side of the menu in a display area generally reserved for similar links such as "My Documents," "My Pictures" and "My Music" links. Alternatively, the "My Shared Spaces" link may be included as part of a sub-list such that the user is required to first select the "My Documents" link to access the "My Shared Spaces" folder.

Having described the graphical representation for access to the "My Shared Spaces" window, the manner in which shared spaces themselves are manipulated is now described. In accordance with a feature of an embodiment of the invention, a shared space display window provides a user access to certain tasks in various modes. In a preferred embodiment, the display window provides a specialized task pane permitting access to operations concerning the shared space in three different modes of operation: (1) no shared space item selected; (2) a shared space item selected; and (3) a membership folder selected.

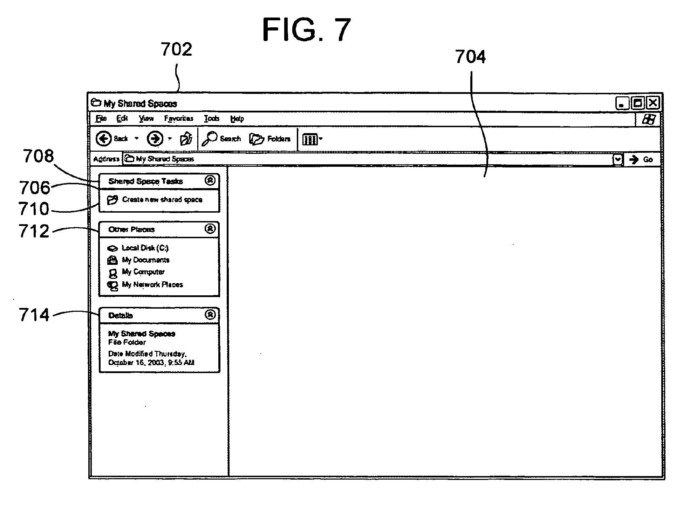

Figure 7 is a graphical display shell window 702 for the shared space illustrating a task view when no shared space item is selected. A right hand pane 704 for the window displays all of the shared spaces created or used by the logged in user, if any. In the window shown, no items are present. A left-hand pane 706 displays a specialized task pane 708 that presents selectable menu items for initiating file system operations relating to a shared space. In the illustrated example, when no item is selected, the specialized task pane 708 presents a selectable "Create new shared space" task 710. The user selects this item 710 to create a shared space by naming the space in a data field as defined by the file system. The name is registered and a describable name space icon is created. When added to the group, other members will also see the name.

In addition to the specialized task pane, the left-hand pane 706 may also include an "Other Places" list 712 containing links to other file system locations. Finally, the left-hand pane includes a file or folder detail panel 714 presenting details concerning the shared space file folder.

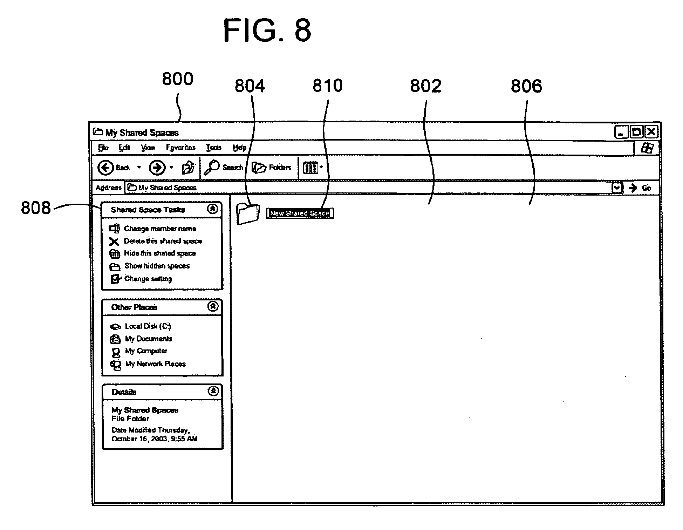

When a shared space file folder icon is selected, the specialized task pane changes to present tasks that can be performed by the shared space user. Figure 8 illustrates the "My Shared Spaces" window 802 in this mode of operation. That is, upon selection by a user of an existing shared space folder such as folder 804 in the right hand pane 806, associated tasks are presented in a specialized task pane 808. Figure 8 shows selection of a "Rename shared space" task within the task pane. This selection causes a name field 810 associated with the shared space folder 804 to be highlighted. The user interface for renaming a group is thus the same as the interface provided by the file system for editing the names of files and directories. As with conventional file system editing operations, a user may edit the shared space name through use of the highlighted in-place edit field 810. This action will cause the name to change for all other group members of the shared space. In accordance with an embodiment, the owner is the only member having name editing privileges. For other group members, the name cannot be edited.

In addition to the task of renaming an existing shared space, the task pane 808 presents a user selectable "Delete this shared space" task. Selecting this task causes the folder icon to be removed from the "My Shared Spaces" folder and deletes the user as a group member. To connect to the shared space in the future, the user is required to be re-invited by the shared space owner or another group member with sufficient rights to invite a new member into the group. Because the action of deleting a shared space is irreversible, an embodiment of the invention presents a dialog box to notify the user of the impact with a dialog that requires an affirmative response from the user in order to complete the task.

The deletion of a shared space by an owner will impact the group in additional ways. Because the shared space owner is the sole entity that has a private key for the group in a preferred embodiment, its deletion will cause the private key to be lost. This means that group properties such as friendly name and the like can no longer be altered. Because the lifetime of member credentials is effectively infinite, other members may continue to connect to and share information in the group. However, when every group member has deleted the shared space, the group will cease to exist. In addition, unless the group owner has given administrator privileges to another group member, no new members can be invited to join the shared space. For this reason, the user is notified with a dialog that requires an affirmative response in order to complete the task of deleting a shared space.

As an alternative to deleting a shared space, the specialized task pane 808 permits a user to hide a shared with a "Hide this shared space" task. A hidden shared space is not visible unless a user activates a "Show hidden spaces" task. Alternatively, a "Show hidden files" folder option may be enabled. It is noted that a hidden shared space will consume less resources as the shared space database and files transferred from other group members will be removed when the space is hidden. However, data shared by the user will remain available. The user credentials required to access or manage the space will remain on the user's computing system. Using these credentials, the hidden shared space can be reconstructed. For this reason, the "Hide shared space" task is a reversible task such that no dialog is displayed in a preferred embodiment.

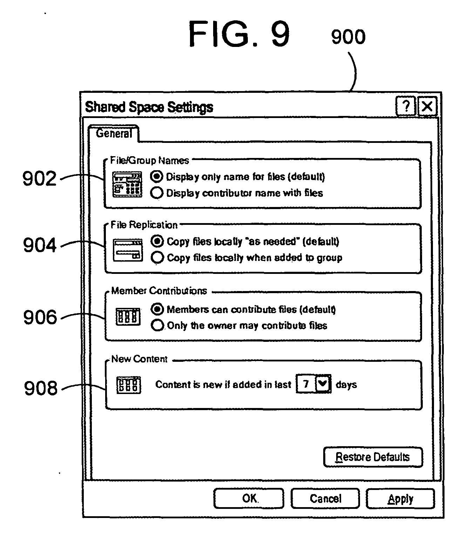

Another user selectable task displayed in the specialized task pane 808 is a "Change setting" task. Selection of this task activates a "Shared Space Settings" dialog, an example of which is illustrated in Figure 9. As shown, a Shared Space Settings" dialog 900 is a graphical presentation of selectable settings options to permit the user to alter the behavior of a shared space or to restore the behavior of the shared space to default settings.

Unlike a traditional file system, a shared space allows two or more group members to contribute to a file with the same name. To permit the user to differentiate between these files, the user may select an option provided in the Settings dialog 900, shown in Figure 9 as a File/Group Names option 902. By selecting a "Display contributor name with files" setting, the user may view the contributor name as a part of the filename. In a preferred embodiment, the default setting is a "Display only the name for files" setting.

Another user selectable option relates to a "File Replication" setting 904. Files that are used in the shared space can be copied to the local machine when they are accessed, that is, they can be copied on an on-demand basis through user selection of a "Copy files locally 'as needed"' setting. Alternatively, they may be replicated to the user's computer when they are added to the shared space by selecting a "Copy files locally when added to group" setting. Similarly, a "Member Contribution" setting 906 permits user selection between a "Members can contribute" setting and a "Only the owner may contribute files" setting. Selection of the latter setting makes members of the group read only. When this setting is selected, only the owner may contribute content to the group.

Finally, the Settings dialog includes a "New Content"setting 908 for permitting user selection of what specifies "new" content. This setting 908 includes a drop down list of options such as 1, 7, 14, 30, 60 and 90 days. This field could optionally include an edit field to permit the user to specify any value.

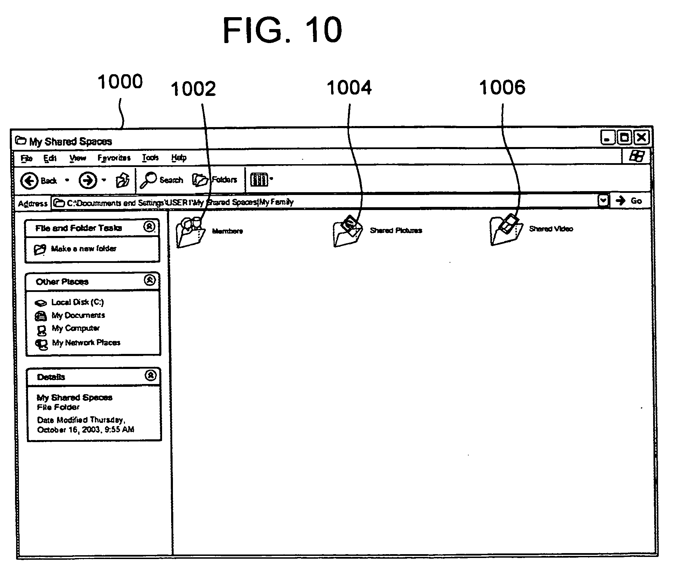

Having described certain details of the location and settings concerning a shared space folder, a member task view will now be described. Figure 10 illustrates a member task view for a graphically presented My Shared Spaces folder 1000. As shown, the My Shared Spaces folder includes subfolders including a Members subfolder 1002, a Shared Pictures subfolder 1004, and a Shared Video subfolder 1006 displayed in a right hand pane of the folder 1000. This layout simplifies user manipulation of files that will be added to the shared space, such as by drag and drop operations. That is, the Shared Pictures and the Shared Video subfolders are links to conventional directories that could even be deleted by the group owner if desired. With shared spaces, a user needs to be invited into a shared space.

To become a group member, a user is invited to join the group space with the issuance of an invitation. Invitation can be done using any out of band mechanism. One of the mechanisms that could be used is location specific. For instance, an invitation could be issued to users located in the same conference room; it could be issued to users on the same network; it could be issued to all users participating in a meeting (whether they are local in the conference room or participating remotely). Once the invitation is received by the invited user, he can join the shared space and participate in sharing files.

In accordance with an embodiment of the invention, group members are also assigned roles within the group. A group owner is an entity that initially creates the group space. The owner adds members by inviting other entities, as explained below, and assigns roles to such other group members. The roles define the level of access to group members. For example, one such role may be that of an administrator, who may be assigned many of the same rights as the owner, including the right to add or delete other group members. Other roles include member, contributor or other custom roles that are assigned rights and privileges to varying degrees. In addition, group members have "presence," that is, each group member publishes his presence when on-line, as explained below. Finally, group members each preferably have the same view, whenever activity occurs with respect to the group space.

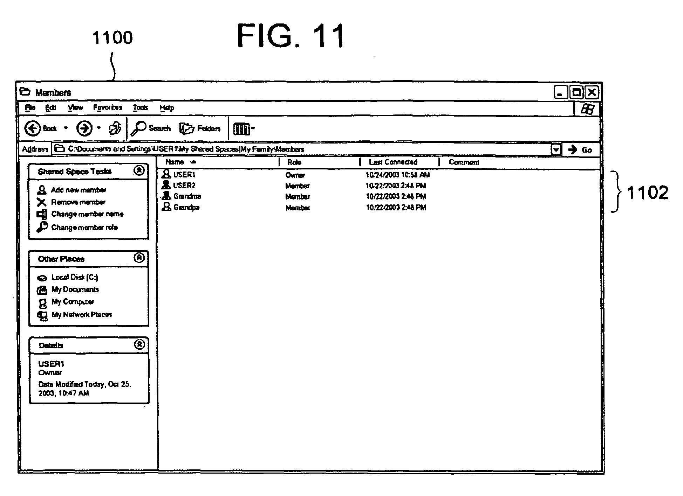

For performing tasks concerning group members, the Members subfolder 1002 has a designated task pane. In a preferred embodiment, when a user opens a Members subfolder 1002, a new Members window is activated. Such a Members window, in turn, is shown in Figure 11 as window 1100. The Members window 1100 includes a list of current members 1102 of the shared space and certain attributes. The illustrated group is a "My Family Members" group comprising a group owner, USER1, and three other family group members, USER2, Grandpa and Grandma. When a group member is connected to the peer-to-peer network, the member entry in the Members list 1102 is selectable by the user. Otherwise, the entry appears grayed out in the list 1102. The members list 1102 may include fields containing the online status of the member in the shared space, the member's role and the last date in which the member connected with the group. In addition to these standard fields, the members list 1102 may further include a comment field for additional information concerning the member.

In addition to a members list 1102, the window 1100 includes a Member task pane 1104 located in the left hand pane of the window. The Member task pane 1104 is used to manage the member list. For adding new members to the group, a user selectable "Add new member" task is selected. In a preferred embodiment, user selection of this task activates a wizard for adding a new member to the shared space. However, before the shared space credentials can be created, the new member's peer-to-peer credentials are obtained.

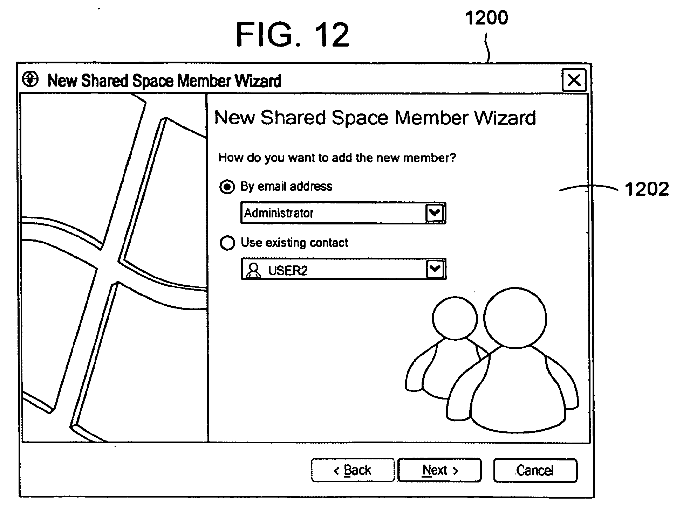

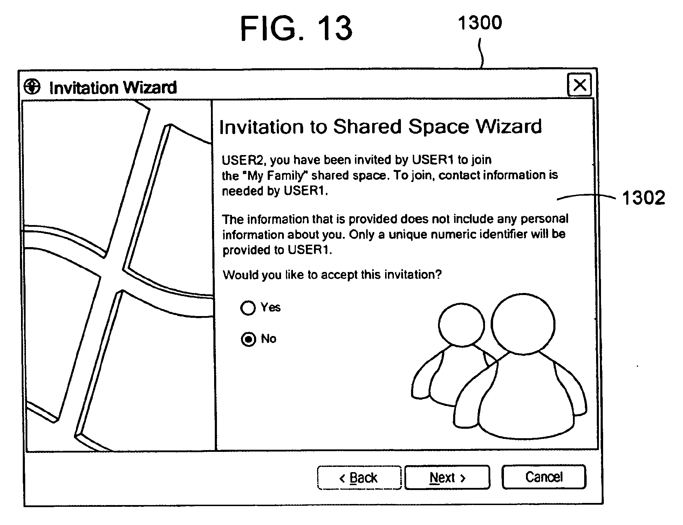

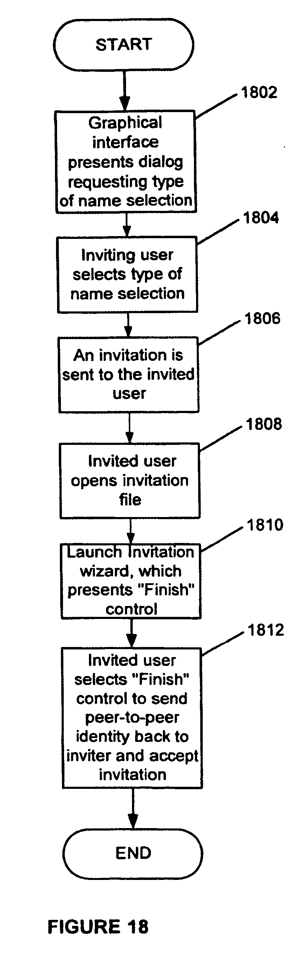

Figures 12 and 13 illustrate graphical representations of the wizards for adding new members to the shared space. Although it must locate the appropriate member through operations that may be relatively complex, the wizard provides an easy-to-use mechanism from a user perspective for obtaining this data. In this regard, Figure 18 is a simplified flow diagram that illustrates various steps performed in carrying out a method for adding new members.

For obtaining a peer-to-peer identity for the new member, a New Shared Space Member Wizard can use data obtained from an existing messenger buddy or an email address. As shown jointly in Figures 12 and 18, a graphical interface presents a dialog 1202 requesting the type of name selection in a first method step 1802. Next, the inviting user selects a type of name in a step 1804. In the case in which the user selects entry of an email address in the step 1804, the invited user will receive an email message providing information that the "[group owner] has invited them to join the [name of shared space] shared space. To view more information about the [name of shared space] shared space, open the attached file."

The attached file contains pure data and has been associated with an Invitation Wizard, which presents a graphical interface as shown in Figure 13. The invited user thereafter opens the attached invitation file in a step 1808. Opening the file will launch the Invitation Wizard in a step 1810 and allow the user to respond to a dialog 1302. In a last step 1812, the invited user sends his peer-to-peer identity back to the inviter through acceptance of the invitation such as by selecting a Finish control presented to the user. As shown the inviter only receives a unique numeric identifier associated with the invited user.

Using the peer-to-peer identity of the members, group credentials are created. An additional email may be created and sent to the user informing them that they are now the member of the shared space.

Having described the manner in which new members are added to a group, the remaining tasks available in the Members window will be described. These tasks relate to existing members of the group. For example, a user selectable "Remove member" task is rendered visible only when a member in the Members list is selected and the user is either an administrator or a group owner for the shared space. Otherwise, this task is unavailable. Selecting the "Remove member" task will remove the selected member's access to the shared space. To access the shared space at a future time, the removed member must be re-invited to join the shared space by the group owner or an administrator. In addition to removing a member, a member's name may be changed by user selection of a "Change member name" task. In a preferred embodiment, this option is only visible when a member is selected and the current user is either an administrator or the group owner for the shared space. This option may optionally be activated by right-clicking the item in the Members list and selecting a Rename option or by clicking on the name in the Members list and activating an in-place edit field.

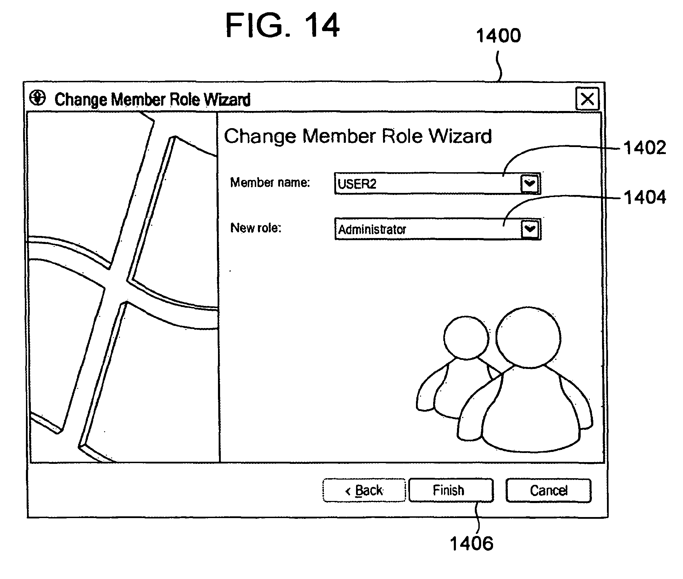

A final user selectable task that is available in the Members task pane is a "Change member role" option. In a preferred embodiment, this option is visible only when a member is selected in the Members list and the current user is either an administrator or the group owner for the shared space. Otherwise, the "Change member role" option is not available. Upon user selection and activation of this option, a display interface preferably as a Change Member Role Wizard 1400 as shown in the title bar in the graphical window in Figure 14 is presented to the user. As shown, this graphical interface includes a Member name field 1402 that may include a drop-down list of other members. In addition, the interface presents a drop-down list of potential roles in a New role field 1404. The interface further includes controls such as a Finish button 1406 for modifying the selected member's access and/or role in the group. In addition, the user may click into the role field contained in the Members list. This action will cause a combination box containing the valid roles available for the member to be presented. Selecting a role from this list will perform the same set of actions as the Change Member Role Wizard.

In accordance with another feature of the invention, files and directories contained in a shared space are accessed in a manner that is similar to the manner in which files and directories are accessed in a conventional file system. The differences impact the user experience in several ways. Because not all files exist locally unless an appropriate setting has been activated as described above, the user is informed of such "missing" files.

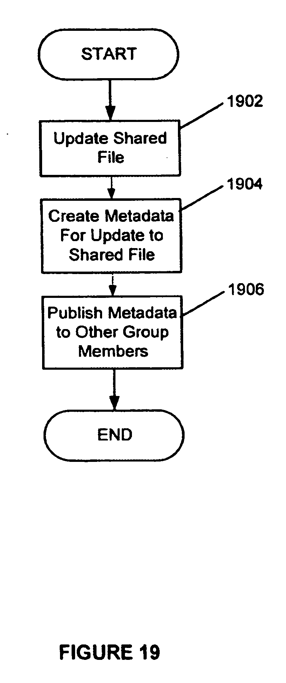

For sharing files among group members, metadata is transmitted to all members when files become available, such as is shown in the steps 1904 and 1906 in the flow chart in Figure 19. Such metadata are sufficient to render an icon of the shared file and may include date, time, thumb-nail information, name size, and optionally the source of the information. This may include an identifier for the source computing machine and the creator identity. In accordance with an embodiment of the invention, the shared content may be download from multiple sources, even though the meta-data concerning an available shared originated at a given machine. That is, shared content can be downloaded from any machine upon which the shared content resides, so it may be more efficient in some circumstances to download piecemeal from multiple peers, as those peers have obtained the shared content from the source. The manner in which a group member downloads available shared files may optionally take into account closeness in terms of IP address, least routing time, and other factors.

The following table illustrates one such implementation of required and optional metadata concerning a shared file. 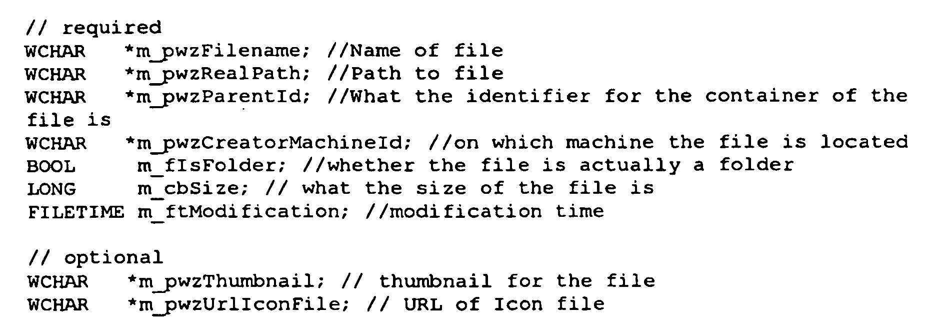 As shown, the name and path to the file are included in the metadata of a transmitted shared file. In addition, an identifier for the container of the shared file is provided as well as the location of the machine on which the file resides. An indication of the type of file, the file size and modification date are also included. Optionally, the transmitted file may include a thumbnail and Uniform Resource Locator for the icon associated with the shared file.

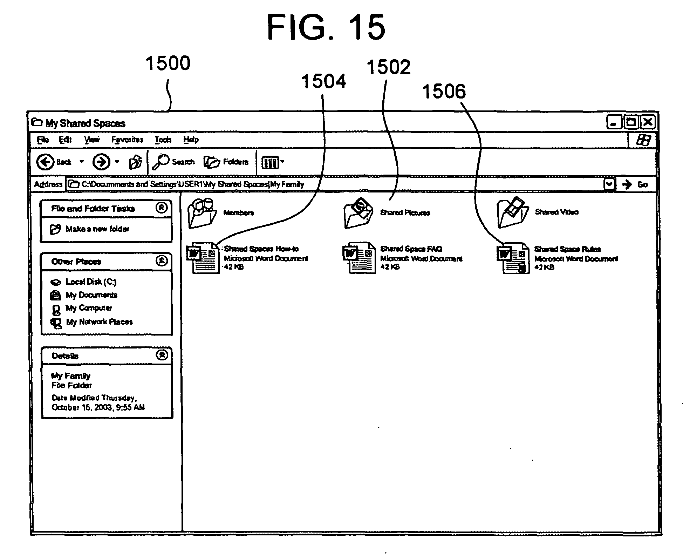

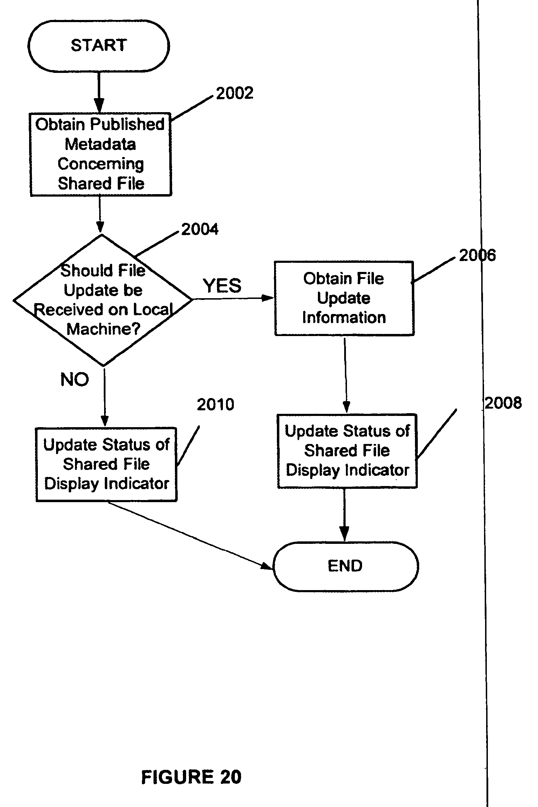

To inform a user of a group shared space file that is not present locally, display icons are presented to the user. Figure 15 illustrates a graphical interface 1500 for a Shared Space folder that contains files that are not local. As shown, a left hand pane 1502 presents a display icon 1504 to denote a "missing" file that is available on another system. This icon is ghosted or semi-transparent. As is shown in the flow chart in Figure 20, the system renders such a display upon receipt that metadata concerning a shared file is available in the peer network, as is shown in method step 2002. Other files that are "missing" may be unavailable to the user, such as when a system that is hosting the file of interest is offline. In this instance, a display icon1506 is presented as a ghosted icon that includes a small image of a red "X" or other suitable visual indicia that the file is unavailable to the user.

Additionally, because content in a group folder is likely to change over time and the organization of content does not enable the user to discern what content is new or has been recently altered, a "new" glyph may be presented on folders and files that are new or have been recently changed. This glyph provides a visual indicator of new content.

When a modification of a file contained in a shared space occurs, a notification to other members in the group occurs (see steps 1902, 1904 and 1906 in Figure 19). In a preferred embodiment, upon receipt of such notification, member machines that have previously obtained a copy of the shared file will remove the local copy of the out-of-date file. This will change the visual representation of the file to a "missing" file within the shared space folder when the application setting does not automatically update files, as is shown in step 2010 in Figure 20. On the other hand, if automatic replication of the shared file is enabled, the local machine obtains an updated version of the file, as is shown in step 2006 in Figure 20. Finally, an appropriate visual indicator is presented to the user as shown in step 2008.

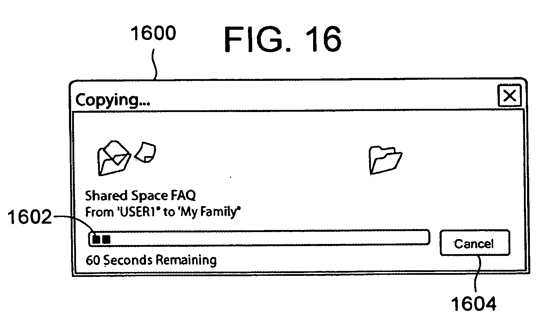

In order for a group space member to access an updated that is not locally stored, the file must first be transmitted to the local machine. Figure 16 illustrates a graphical interface of a file copy dialog 1600 presented to the user for indicating that a transfer operation is occurring. When the file is available on the local machine, the icon providing a shortcut to the shared file will be updated to reflect the file transfer. When the file is requested via an open dialog, the file will be opened in the requested application at the completion of the file transfer. The user is presented with a visual indication of the file transfer as shown in the graphic 1602. Figure 16 also illustrates a Cancel control 1604 for terminating a file transfer.

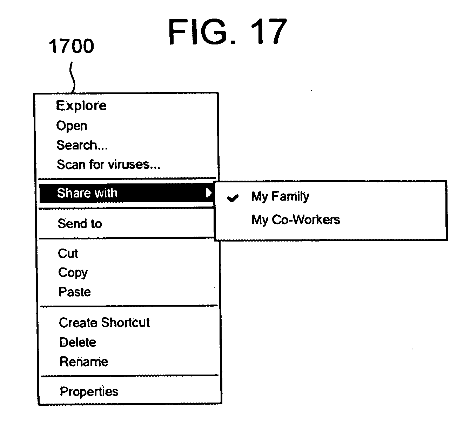

For adding to or removing files or directories from a shared space, the user may right-click an icon associated with the content of interest to present a graphical interface, such as a Context Menu 1700 shown in Figure 17. The Context Menu 1700 is presented with the look and feel of a file system menu having various user selectable menu options such as Explore, Open, Search and the like. In addition, the Menu includes a "Share with" menu item 1702. By user selection of this item, a drop-down list of available groups is presented. Each shared space that contains the selected file or directory will include a graphical representation such as a check mark 1704 as shown in Figure 17. File or directory sharing of the selected item may be terminated by un-checking a shared space. Un-checking the shared space from the "Share with" menu removes the contributors' copy of the file or directory from the shared space. In the event that other group members have transferred the shared file locally, the file is preferably removed from each machine hosting the content.

In addition to using a context menu, files may also be dragged into the shared space folder from another Explorer window. Cut/Copy and Paste editing operations may also be used to transfer the file to the shared space folder. In this way, the file is copied and/or moved to the local shared space folder as indicated by the user action.

As with conventional files and directories, a shared file or directory may be readily moved by the sharing member to other locations within the shared space hierarchy. For example, the sharing member may drag a file into a different folder. Members may create new folders in the shared space for organizing content. In accordance with one feature, while any member may store content in any directory that is present in the shared space even if another member contributed to the directory, only the member who shared the content may change its location within the shared space.

In a preferred embodiment, the application maintains metric for all peers connected to the source machine. Such metric indicate response time of the peer machine, the availability of the peer machines and like data for use in the decision of how the shared data will be obtained. Thus, a download session can be suspended and resumed such that, if a portion of a shared file is downloaded and then suspended, the next time the group member is connected to the peer network or when they resume the download, the download resumes at the next place after the one that was last copied.

The invention also addresses security as share spaces transmit all shared information as encrypted. Thus, in an embodiment, a group administrator or owner supplies an enterprise policy such as group creation, how many group members are present, who can be members, such as employees of corporation X but not of corporation Y, domains, whether content can be shared. The group policy is transmitted to all the machines in the domain to which the policy pertains. The application of the invention reads and obeys such policy.

Because shared files are sometimes large files such as video files, the issue of throttling may arise. Therefore, the invention may include a user option to specify the amount of total bandwidth to be used for files downloads to other machines. Alternatively, a user might prioritize certain groups through a policy such that whenever the user is not using email or browsing, then the group space application can use the extra bandwidth to distribute files.

In some instances, the shared content may be rights protected material such as copyrighted material such that it cannot be legally copied to each of the group machines. In this case, the application may stream the content so that a copy is not created and stored on other machines belonging to group members. Instead, such other group members may listen to, watch or otherwise experience the protected content. Such action could be user driven or the application could automatically detect that certain material is digital rights management (DRM ) protected. During transfer, the user can stop and start the transfer as well as observe the status of the transfer by percent delivered. The user may optionally reject a file transfer request. Because group members have credentials that describe who they are, what they can do and how they authenticate with other group members, such actions are readily implemented. As noted above, content transferred to other group members is encrypted in any event.

In this way, the invention enables interactions among group members according to real world scenarios. For example, a user may take voluminous pictures and some video of his or her children. Because sharing such content, especially the video content, is particular difficult, the user may simply create a Family shared space to use in order to exchange these and other files with his or her relatives. In another real world example, a user may schedule a meeting with several members of her business team and a few partners she has met at a tradeshow. Because she plans to share some information with other meeting participants, the user creates a group shared space for the meeting and uses the list of people "near" her to add her team members and the partners to the group. The user also may pre-populate the shared space with the presentation and other materials as desired. As attendees arrive to the meeting and power on their computing systems in preparation for the meeting, they are notified that a shared space has been created, join the shared space and access the documents. In addition, such attendees can readily add other materials concerning the meeting. When the meeting concludes, the user and or other attendees may delete the shared space or maintain it for on-going collaboration.

Various activities may occur in the group space. Such activities may include file sharing, chatting either by text and/or audio visual, gaming, white boarding, message boarding, content distribution, distribution of software and patches. Indeed, the invention may be used to perform distributed computing tasks such as, for example, working together to solve common task such as weather forecasting, complex biological problems, like mapping DNA, astronomical process analysis, or searching within group content for basic research tasks.

It will be appreciated that a novel application and interface for group interaction over a network have been described. In view of the many possible embodiments to which the principles of this invention may be applied, it should be recognized that the embodiments described herein with respect to the drawing figures are illustrative and should not be taken as limiting the scope of the invention. For example, those skilled in the art will recognize that elements of the illustrated embodiments shown in software may be implemented in hardware and vice versa or that the illustrated embodiments can be modified in arrangement and detail without departing from the spirit of the invention. For example, although the invention has been described primarily with reference to personal computers and their associated displays and desktops, it should be appreciated that the invention does not require a PC or a traditional desktop. Instead, the invention can also be implemented on other devices that support a visual display function. Therefore, the invention as described herein contemplates all such embodiments as may come within the scope of the following claims.

## Claims

1. A method for facilitating file sharing among a first member of a group and at least one other member of the group over a peer-to-peer network (209) by means of a graphical user interface associated with a group interaction application, and for providing a server-less shared space, wherein files contained in the shared space are copied to local machines of other group members and automatically updated at the local machines upon modification, the method comprising:
displaying a group space comprising a first display area (704) of the graphical user interface for providing an appearance of a shared file location in which at least one of the other group members may access; and
displaying at least one control located in a second display area of the graphical user interface selectable by the first member for selecting at least one task associated with the group space and to activate certain operations with respect to files located in the first display area, such that at least one other group members is automatically shown the result of the operations performed with respect to the files displayed in the first display area,
wherein the method further comprises, upon modifying by the first member a shared file contained in the shared space:
creating (1904) metadata concerning the modified shared file and publishing (1906) the metadata to the other group members;
automatically updating (2006) a copy of the shared file stored at the local machine of another group member, when the metadata concerning the modified shared file are obtained (2002) by the other group member; and
presenting (2008) an updated status of the shared file by means of a visual indicator.

2. The method according to claim 1, wherein the at least one task comprises a first computer file system task usable to perform a drag and drop operation with respect to files located in the first display area (704).

3. The method according to claim 1, wherein the at least one task comprises a first computer file system task usable to perform at least one of a copy, cut, paste or edit operation with respect to files located in the first display area (704).

4. The method according to claim 1, wherein the group space is comprised of a subfolder that is displayed in a folder view.

5. The method according to claim 1, wherein the first member may perform file system operations with respect to files in the shared space on the basis of permissions being granted to the first user.

6. The method according to claim 1, wherein said group space is assigned a unique identifier that is made available to the at least one other member.

7. The method according to claim 6, wherein each of the group members having access to said group space is assigned a unique identifier that is made available to the other group members.

8. The method according to claim 1, wherein the graphical user interface further comprises a second control located in the second display area, the second control including a drop-down menu (1404) selectable by the first member for defining one of a plurality of roles for the at least one other group member.

9. The method according to claim 1, wherein the graphical user interface further comprises a second control located in the second display area, the second control selectable by the first member for adding at least one additional group member.

10. The method according to claim 1, wherein the appearance of the first group space may be altered by the first member, and wherein the group interaction program further comprises means for causing the appearance of a corresponding group space displayed to the at least one other group member to also be altered consistent with the alteration of the first group space.

11. The method according to claim 1, wherein the graphical user interface further comprises a file drop target for receiving an indication of a file dropped by the first member whereby a notification corresponding to the indication is automatically transmitted to the at least one other online group member.

12. The method according to claim 1, wherein the graphical user interface further comprises a selectable indicator for visually presenting a group list (1102) to the first member, the group list including an indication field of a role for each of the members in the list a plurality of icons, each icon representing a group to which the first member belongs.

13. The method according to claim 12, wherein the list (1102) of group members includes indicia concerning connection by each group members to the network (209).

14. The method according to claim 1, wherein:
the first display area (704) of the graphical user interface acts as a drop target for at least one file icon, which upon dropping also becomes visible to the at least one other online member of the group, and wherein a shared file associated with the at least one dropped file icon may be retrieved by selecting the associated file icon; and
at least one visible task item is selectable by the first member to activate an operation to be performed with respect to the first display area.

15. The method according to claim 1, wherein the method is further for forming a group space to enable interaction between a first member and at least one other member over a network (209) comprising:
displaying to the first member via a first member display a group folder object having associated therewith a first selectable task for forming a group comprising the first member and at least one other member;
transmitting from the first member an invitation request to join the group by sending a communication over the network to a computing device used by the at least one other member to initiate a group communication session between the first member and the at least one other member; and
receiving a response to the invitation request by receipt of a unique numeric identifier associated with the at least one other member.

16. The method according to claim 15, further comprising presenting a group space to the first member in response to receipt of the selection of the task, wherein the group space is uniquely associated with the group.

17. The method according to claim 16, wherein the group space includes a second selectable group icon associated with a list of members comprising the first member and at least one other member who is a member of the group.

## Patentansprüche

1. Verfahren zum Erleichtern gemeinsamer Dateinutzung (file sharing) zwischen einem ersten Mitglied einer Gruppe und wenigstens einem anderen Mitglied der Gruppe über ein Peer-to-Peer-Netzwerk (209) mittels einer graphischen Benutzeroberfläche, die mit einer Gruppeninteraktions-Anwendung verknüpft ist, und zum Bereitstellen eines gemeinsam genutzten Raums ohne Server (server-less shared space), wobei Dateien, die in dem gemeinsam genutzten Raum enthalten sind, auf lokale Computer anderer Gruppenmitglieder kopiert und bei Modifizierung automatisch auf den lokalen Computern aktualisiert werden, und das Verfahren umfasst:
Anzeigen eines Gruppen-Raums, der einen ersten Anzeigebereich (704) der graphischen Benutzeroberfläche umfasst, um eine Darstellung eines Speicherorts einer gemeinsam genutzten Datei bereitzustellen, auf den wenigstens eines der anderen Gruppenmitglieder zugreifen kann; und
Anzeigen wenigstens eines Steuerelementes, das sich in einem zweiten Anzeigebereich der graphischen Benutzeroberfläche befindet und von dem ersten Mitglied ausgewählt werden kann, um wenigstens eine Aufgabe auszuwählen, die mit dem Gruppen-Raum verknüpft ist, und bestimmte Operationen in Bezug auf Dateien zu aktivieren, die sich in dem ersten Anzeigebereich befinden, so dass wenigstens einem anderen Gruppenmitglied automatisch das Ergebnis der in Bezug auf die in dem ersten Anzeigebereich angezeigten Dateien durchgeführten Operationen gezeigt wird,
wobei das Verfahren des Weiteren nach dem Modifizieren einer in dem gemeinsam genutzten Raum enthaltenen gemeinsam genutzten Datei durch das erste Mitglied umfasst:
Erzeugen (1904) von Metadaten bezüglich der modifizierten gemeinsam genutzten Datei und Veröffentlichen (1906) der Metadaten für die anderen Gruppenmitglieder;
automatisches Aktualisieren (2006) einer Kopie der an dem lokalen Computer eines anderen Gruppenmitgliedes gespeicherten gemeinsam genutzten Datei, wenn die Metadaten bezüglich der modifizierten gemeinsam genutzten Datei durch das andere Gruppenelement erfasst werden (2002); und
Darstellen (2008) eines aktualisierten Status der gemeinsam genutzten Datei mittels eines visuellen Anzeigers.

2. Verfahren nach Anspruch 1, wobei die wenigstens eine Aufgabe eine erste Computer-Dateisystem-Aufgabe umfasst, die verwendet werden kann, um eine Drag-and-Drop-Operation in Bezug auf in dem ersten Anzeigebereich (704) befindliche Dateien durchzuführen.

3. Verfahren nach Anspruch 1, wobei die wenigstens eine Aufgabe eine erste Computer-Dateisystem-Aufgabe umfasst, die verwendet werden kann, um wenigstens eine Kopier-, Ausschneide-, Einfüge- oder Bearbeitungs-Operation in Bezug auf in dem ersten Anzeigebereich (704) befindliche Dateien durchzuführen.

4. Verfahren nach Anspruch 1, wobei der Gruppen-Raum aus einem Unterordner besteht, der in einer Ordneransicht angezeigt wird.

5. Verfahren nach Anspruch 1, wobei das erste Element Dateisystem-Operationen in Bezug auf Dateien in dem gemeinsam genutzten Raum auf Basis dem ersten Benutzer erteilter Genehmigungen durchführen kann.

6. Verfahren nach Anspruch 1, wobei dem Gruppen-Raum eine eindeutige Kennung zugewiesen wird, die für das wenigstens eine andere Mitglied verfügbar gemacht wird.

7. Verfahren nach Anspruch 6, wobei jedem der Gruppenmitglieder, die Zugang zu dem Gruppen-Raum haben, eine eindeutige Kennung zugewiesen wird, die für die anderen Gruppenmitglieder verfügbar gemacht wird.

8. Verfahren nach Anspruch 1, wobei die graphische Benutzeroberfläche des Weiteren ein zweites Steuerelement umfasst, das sich in dem zweiten Anzeigebereich befindet, und das zweite Steuerelement ein Drop-Down-Menü (1404) enthält, das von dem ersten Mitglied ausgewählt werden kann, um eine Vielzahl von Rollen für das wenigstens eine andere Gruppenmitglied zu definieren.

9. Verfahren nach Anspruch 1, wobei die graphische Benutzeroberfläche des Weiteren ein zweites Steuerelement umfasst, das sich in dem zweiten Anzeigebereich befindet, und das zweite Steuerelement durch das erste Mitglied ausgewählt werden kann, um wenigstens ein zusätzliches Gruppenmitglied hinzuzufügen.

10. Verfahren nach Anspruch 1, wobei das Erscheinungsbild des ersten Gruppen-Raums durch das erste Mitglied geändert werden und das Gruppeninteraktions-Programm des Weiteren eine Einrichtung umfasst, mit der veranlasst wird, dass das Erscheinungsbild eines für das wenigstens eine andere Gruppenmitglied angezeigten entsprechenden Gruppen-Raums ebenfalls entsprechend der Änderung des ersten Gruppen-Raums geändert wird.

11. Verfahren nach Anspruch 1, wobei die graphische Benutzeroberfläche des Weiteren ein Datei-Ablegeziel zum Empfangen einer Anzeige einer Datei umfasst, die von dem ersten Mitglied abgelegt wird, so dass eine Mitteilung, die der Anzeige entspricht, automatisch zu dem wenigstens einen anderen Gruppenmitglied übertragen wird, das online ist.

12. Verfahren nach Anspruch 1, wobei die graphische Benutzeroberfläche des Weiteren einen auswählbaren Anzeiger umfasst, mit dem dem ersten Mitglied eine Gruppenliste (1102) visuell dargestellt wird, wobei die Gruppen-Liste ein Anzeigefeld einer Rolle für jedes der Mitglieder in der Liste sowie eine Vielzahl von Icons enthält und jedes Icon eine Gruppe darstellt, zu der das erste Mitglied gehört.

13. Verfahren nach Anspruch 12, wobei die Liste (1102) von Gruppenmitgliedern Zeichen enthält, die Verbindung jedes der Gruppenmitglieder zu dem Netzwerk (209) betreffen.

14. Verfahren nach Anspruch 1, wobei:
der erste Anzeigebereich (704) der graphischen Benutzeroberfläche als ein Ablegeziel für wenigstens ein Datei-Icon dient, das beim Ablegen ebenfalls für das wenigstens eine andere Mitglied der Gruppe sichtbar wird, das online ist, und eine mit dem wenigstens einen abgelegten Datei-Icon verknüpfte gemeinsam genutzte Datei abgerufen werden kann, indem das dazugehörige Datei-Icon ausgewählt wird; und
wenigstens ein sichtbares Aufgaben-Element durch das erste Mitglied ausgewählt werden kann, um eine in Bezug auf den ersten Anzeigebereich durchzuführende Operation zu aktivieren.

15. Verfahren nach Anspruch 1, wobei das Verfahren des Weiteren dazu dient, einen Gruppen-Raum auszubilden, um Interaktion zwischen einem ersten Mitglied und wenigstens einem anderen Mitglied über ein Netzwerk (209) zu ermöglichen, und das Verfahren umfasst:
Anzeigen eines Gruppen-Verzeichnisobjektes, mit dem eine erste auswählbare Aufgabe zum Ausbilden einer Gruppe verknüpft ist, die das erste Mitglied und wenigstens ein anderes Mitglied umfasst, für das erste Mitglied über eine Anzeigeeinrichtung des ersten Mitgliedes;
Übertragen einer Einladungsaufforderung zum Beitreten zu der Gruppe von dem ersten Mitglied durch Senden einer Mitteilung über das Netzwerk zu einer Computervorrichtung, die von dem wenigstens einen anderen Mitglied genutzt wird, um eine Gruppen-Kommunikationssitzung zwischen dem ersten Mitglied und dem wenigstens einen anderen Mitglied einzuleiten; und
Empfangen einer Antwort auf die Einladungsaufforderung über Empfang einer eindeutigen numerischen Kennung, die mit dem wenigstens einen anderen Mitglied verknüpft ist.

16. Verfahren nach Anspruch 15, das des Weiteren Darstellen eines Gruppen-Raums für das erste Mitglied in Reaktion auf Empfang der Auswahl der Aufgabe umfasst, wobei der Gruppen-Raum eindeutig mit der Gruppe verknüpft ist.

17. Verfahren nach Anspruch 16, wobei der Gruppen-Raum ein zweites auswählbares Gruppen-Icon enthält, das mit einer Liste von Mitgliedern verknüpft ist, die das erste Mitglied und wenigstens ein anderes Mitglied umfassen, das ein Mitglied der Gruppe ist.

## Revendications

1. Procédé permettant de faciliter le partage de fichiers entre un premier membre d'un groupe et au moins un autre membre du groupe sur un réseau de pair à pair (209) au moyen d'une interface utilisateur graphique associée à une application d'interaction de groupe, et permettant de mettre en oeuvre un espace partagé sans serveur, dans lequel des fichiers contenus dans l'espace partagé sont copiés vers des machines locales d'autres membres du groupe et automatiquement actualisés sur les machines locales lors d'une modification, le procédé comportant :
l'affichage de l'espace du groupe comportant une première zone d'affichage (704) de l'interface utilisateur graphique pour obtenir un aspect d'un emplacement de fichiers partagés auquel au moins l'un des autres membres du groupe puisse accéder ; et
l'affichage d'au moins un contrôle, placé dans une seconde zone d'affichage de l'interface utilisateur graphique, et susceptible d'être sélectionné par le premier membre pour sélectionner au moins une tâche associée à l'espace de groupe et pour activer certaines opérations par rapport aux fichiers situés dans la première zone d'affichage, de telle sorte qu'au moins un autre membre du groupe puisse automatiquement visualiser le résultat des opérations mises en oeuvre par rapport aux fichiers affichés dans la première zone d'affichage,
dans lequel le procédé comporte en outre, lors de la modification par le premier membre d'un fichier contenu dans l'espace partagé :
la création (1904) de métadonnées concernant le fichier partagé modifié et la publication (1906) de métadonnées pour les autres membres du groupe ;
la mise à jour automatique (2006) d'une copie du fichier partagé stocké sur la machine locale d'un autre membre du groupe, lorsque les métadonnées concernant le fichier partagé modifié sont obtenues (2002) par l'autre membre du groupe ; et
la présentation (2008) d'un état actualisé du fichier partagé au moyen d'un indicateur visuel.

2. Procédé selon la revendication 1, dans lequel ladite tâche comporte une première tâche de système de fichiers informatique utilisable pour procéder à une opération glisser-déplacer concernant les fichiers situés dans la première zone d'affichage (704).

3. Procédé selon la revendication 1, dans lequel ladite tâche comporte une première tâche de système de fichiers informatique utilisable pour procéder à une opération copier, couper, coller ou éditer concernant les fichiers situés dans la première zone d'affichage (704).

4. Procédé selon la revendication 1, dans lequel l'espace de groupe est constitué d'un sous-dossier affiché dans une vue de dossier.

5. Procédé selon la revendication 1, dans lequel le premier membre peut effectuer des opérations de système de fichiers concernant les fichiers présents dans l'espace partagé en se basant sur des autorisations accordées au premier utilisateur.

6. Procédé selon la revendication 1, dans lequel un identifiant unique mis à la disposition d'au moins un autre membre est affecté audit espace de groupe.

7. Procédé selon la revendication 6, dans lequel est affecté à chacun des membres du groupe ayant accès audit espace de groupe un identifiant unique mis à la disposition des autres membres du groupe.

8. Procédé selon la revendication 1, dans lequel l'interface utilisateur graphique comporte en outre un second contrôle, présent dans la seconde zone d'affichage, le second contrôle incluant un menu déroulant (1404) susceptible d'être sélectionné par le premier membre pour définir l'un de plusieurs rôles pour ledit autre membre du groupe.

9. Procédé selon la revendication 1, dans lequel l'interface utilisateur graphique comporte en outre un second contrôle, présent dans la seconde zone d'affichage, le second contrôle pouvant être sélectionné par le premier membre pour ajouter au moins un membre supplémentaire du groupe.

10. Procédé selon la revendication 1, dans lequel l'aspect du premier espace de groupe peut être modifié par le premier membre, et dans lequel le programme d'interaction de groupe comporte en outre un moyen permettant également de modifier l'aspect d'un espace de groupe correspondant affiché pour ledit autre membre de groupe de manière cohérente avec la modification du premier espace de groupe.

11. Procédé selon la revendication 1, dans lequel l'interface utilisateur graphique comporte en outre une cible de déplacement de fichier pour recevoir une indication d'un fichier déplacé par le premier membre, ce qui provoque la transmission automatique d'une modification correspondant à l'indication auprès dudit autre membre du groupe en ligne.

12. Procédé selon la revendication 1, dans lequel l'interface utilisateur graphique comporte en outre un indicateur susceptible d'être sélectionné pour présenter visuellement une liste des groupes (1102) au premier membre, la liste des groupes incluant un champ d'indication d'un rôle de chacun des membres de la liste comportant plusieurs icônes, chacune des icônes représentant un groupe auquel appartient le premier membre.

13. Procédé selon la revendication de 12, dans lequel la liste (1102) des membres du groupe inclut des marques distinctives relatives à la connexion de chaque membre du groupe au réseau (209).

14. Procédé selon la revendication 1, dans lequel :
la première zone d'affichage (704) de l'interface utilisateur graphique joue le rôle d'une cible de dépôt pour au moins une icône de fichier, qui, après le dépôt devient également visible pour ledit autre membre du groupe en ligne, et dans lequel un fichier partagé associé à ladite icône de fichier déposé peut être obtenu en sélectionnant l'icône de fichier associée ; et
au moins un élément de tâche visible peut être sélectionné par le premier membre pour activer une opération qui doit être réalisée concernant la première zone d'affichage.

15. Procédé selon la revendication 1, dans lequel le procédé permet en outre de constituer un espace de groupe permettant l'interaction entre un premier membre et au moins un autre membre au moyen d'un réseau (209) comportant :
l'affichage pour le premier membre, au moyen d'un dispositif d'affichage du premier membre, d'un objet de dossier de groupe associé à une première tâche susceptible d'être sélectionnée pour constituer un groupe comprenant le premier membre et au moins un autre membre ;
la transmission par le premier membre d'une demande d'invitation à rejoindre le groupe en envoyant une communication sur le réseau à un dispositif informatique utilisé par ledit autre membre, afin de déclencher une session de communication de groupe entre le premier membre et ledit autre membre ; et
la réception d'une réponse à la demande d'invitation par réception d'un identifiant numérique unique associé audit autre membre.

16. Procédé selon la revendication 15, comportant en outre la présentation d'un espace de groupe au premier membre en réponse à la réception de la sélection de la tâche, dans lequel l'espace de groupe est associé de manière unique au groupe.

17. Procédé selon la revendication 16, dans lequel l'espace de groupe inclut une seconde icône de groupe susceptible d'être sélectionnée, associée à une liste de membres comprenant le premier membre, et au moins un autre membre qui est un membre du groupe.
